# EUROPÄISCHE PATENTSCHRIFT

(11) **EP 4 483 083 B1**
(45) Veröffentlichungstag und Bekanntmachung des Hinweises auf die Patenterteilung: **10.12.2025**
(21) Anmeldenummer: 23707304.4
(22) Anmeldetag: 20.02.2023
(51) Int. Cl.: F16K 31/04, F16K 37/00, F16K 35/00, H05K 5/02, H05K 5/00

(54) **VORRICHTUNG DER FLUIDTECHNIK**
FLUID TECHNOLOGY DEVICE
DISPOSITIF DE TECHNOLOGIE DE FLUIDE

(30) Priorität: 22.02.2022 DE 102022104172
(43) Veröffentlichungstag der Anmeldung: 01.01.2025
(73) Patentinhaber: GEMÜ Gebr. Müller Apparatebau GmbH & Co. Kommanditgesellschaft, 74653 Ingelfingen (DE)
(72) Erfinder: MAGEJ, Johann, 74523 Schwäbisch Hall (DE); LECHMANN, Vadim, 74653 Künzelsau (DE)
(74) Vertreter: DREISS Patentanwälte PartG mbB
(86) Internationale Anmeldenummer: PCT/EP2023/054209
(87) Internationale Veröffentlichungsnummer: WO 2023/161191

(56) Entgegenhaltungen:
- CN-Y- 201 210 776
- US-A1- 2002 136 586
- US-A1- 2020 191 284
- US-A1- 2022 024 785
- US-B2- 8 622 058
- US-B2- 9 093 783

## Beschreibung

Die Erfindung betrifft Fortschritte im Bereich der Prozessfluidtechnik.

Es ist bekannt, dass manipulationssichere und verplombte Vorrichtungen im Bereich der Prozessfluidtechnik sowohl die Prozesssicherheit erhöhen als auch die Klärung von Ansprüchen bei Gewährleistung verbessern. US9093783B2 offenbart eine Vorrichtung gemäß dem Oberbegriff des Anspruchs 1. US8622058B2 und US2002/136586A1 offenbaren verplombte Vorrichtungen.

Die der Erfindung zugrundeliegenden Probleme werden durch eine Vorrichtung gemäß dem Anspruch 1 gelöst. Vorteilhafte Weiterbildungen finden sich in den Unteransprüchen, der nachfolgenden Beschreibung sowie in der Zeichnung.

Ein Aspekt der Beschreibung betrifft den folgenden Gegenstand: Eine Vorrichtung der Prozessfluidtechnik umfassend ein erstes und ein zweites Gehäuse, welche über jeweilige erste und zweite Schnittstellen zueinander rotierbar von einem nicht verriegelten Zustand in einen verriegelten Zustand überführbar sind, und wobei in dem verriegelten Zustand eine in das zweite Gehäuse eingebrachte Durchgangsöffnung, welche zu einer Entriegelungsfläche eines flexiblen Verriegelungselements der ersten Schnittstelle führt, von einem zerstörbaren Siegel verschlossen ist.

Die Vorrichtung ist also nur dann öffenbar, wenn man das Siegel entfernt oder zerstört, um an die Durchgangsöffnung zu gelangen. Durch die Durchgangsöffnung wird ein Werkzeug geführt, welches auf die Entriegelungsfläche drückt. Die Spitze des Werkzeugs drückt also das flexible Verriegelungselement aus seiner Verriegelungsposition heraus und ermöglicht dadurch die Verdrehung der beiden Körper zueinander in den nicht verriegelten Zustand.

Vorteilhaft wird dadurch die Prozesssicherheit der fluidführenden Anlage verbessert, da die beteiligten Vorrichtungen und Geräte dadurch vor Manipulation gesichert werden.

Ein weiterer Vorteil betrifft eine werkzeuglose und damit eine einfache und schnelle Montage sowie eine werkzeugbehaftete Demontage, die die funktionale Sicherheit des Gerätes erhöht.

Ein vorteilhaftes Beispiel zeichnet sich dadurch aus, dass die erste und zweite Schnittstelle einen Bajonettverschluss umfassen, bei welchem Vorsprünge in dem verriegelten Zustand in zugeordnete Bajonettbahnen eingreifen.

Vorteilhaft ermöglicht eine einfache Steck-Drehbewegung die Festlegung der beiden Gehäuse zueinander. Dadurch wird auch eine werkzeuglose Montage der beiden Gehäuse der Vorrichtung ermöglicht.

Ein vorteilhaftes Beispiel zeichnet sich dadurch aus, dass in dem verriegelten Zustand eine Bewegung des flexiblen Verriegelungselements in Öffnungsrichtung von einem Anschlag der zweiten Schnittstelle verhindert wird.

Das flexible Verriegelungselement sorgt also mit dem Anschlag dafür, dass ohne weitere Maßnahmen eine Bewegung in Öffnungsrichtung blockiert ist.

Ein vorteilhaftes Beispiel zeichnet sich dadurch aus, dass in dem verriegelten Zustand eine Bewegung des flexiblen Verriegelungselements in Öffnungsrichtung ermöglicht wird, wenn ein freies Ende des flexiblen Verriegelungselements durch ein Einleiten einer Kraft auf die Entriegelungsfläche derart weit nach innen gedrückt wird, dass das freie Ende über den Anschlag hinweg in die Öffnungsrichtung drehbar ist.

Vorteilhaft muss für diese Entriegelung das Siegel zerstört werden, die sich vor der Durchgangsöffnung befindet.

Ein vorteilhaftes Beispiel zeichnet sich dadurch aus, dass das zweite Gehäuse einen weiteren Anschlag umfasst, welcher in dem entriegelten Zustand die Bewegung des Verriegelungselements in Öffnungsrichtung begrenzt.

Vorteilhaft trifft das Verriegelungselement damit auf den weiteren Anschlag, der eine Drehposition der beiden Schnittstellen zueinander definiert, in welcher die beiden mit einer Axialbewegung bzw. Steckbewegung voneinander getrennt bzw. zusammengefügt werden können.

Ein vorteilhaftes Beispiel zeichnet sich dadurch aus, dass in dem verriegelten Zustand eine Bewegung der ersten Schnittstelle entgegen der Öffnungsrichtung von wenigstens einem Gegenanschlag der zweiten Schnittstelle verhindert wird.

Vorteilhaft entsteht somit ein Formschluss zwischen den beiden Schnittstellen in beide Drehrichtungen und der verriegelte Zustand ist damit definiert.

Ein vorteilhaftes Beispiel zeichnet sich dadurch aus, dass eine Bewegung des flexiblen Verriegelungselements radial nach innen durch einen inneren Anschlag der ersten Schnittstelle begrenzt wird.

Vorteilhaft wird dadurch verhindert, dass das Verriegelungselement über den durch den inneren Anschlag definierten Punkt hinwegbewegt wird und beschädigt wird.

Ein vorteilhaftes Beispiel zeichnet sich dadurch aus, dass wenigstens eines der Gehäuse einen Innenraum aufweist, in welchem eine Steuereinheit zum Betreiben eines Aktors und/oder eines Sensors angeordnet ist.

Das Siegel schützt die Elektronik vor nicht überwachten Veränderungen und verbessert damit sowohl die Prozesssicherheit als auch die Garantieabwicklung.

Ein vorteilhaftes Beispiel zeichnet sich dadurch aus, dass das Siegel einen Klebefilm umfasst, welcher das Siegel mit einer die Durchgangsöffnung umgebenden Außenfläche des zweiten Gehäuses verbindet.

Vorteilhaft wird das Siegel am Ende des Fertigungsvorgangs auf die vorgesehene Außenfläche geklebt und verschließt den Eingang der Durchgangsöffnung.

Ein vorteilhaftes Beispiel zeichnet sich dadurch aus, dass das Siegel ein Typenschild ist.

Neben dem Verschließen der Durchgangsöffnung wird das Siegel vorteilhaft dazu genutzt, die Typenangaben, also mit der Vorrichtung verknüpfte technische Informationen, mit der Vorrichtung zu verbinden.

In der Zeichnung werden durchgehend die gleichen Bezugszeichen verwendet. In der Beschreibung werden die Bezugszeichen auch dann verwendet, wenn sie in der beschriebenen Figur nicht eingezeichnet sind. In der Zeichnung zeigen:
- Figur 1: eine Vorrichtung der Fluidtechnik in einer Explosionsansicht;
- Figur 2: ein erstes Gehäuse der Vorrichtung;
- Figur 3: ein zweites Gehäuse der Vorrichtung;
- Figuren 4 und 6: einen verriegelten Zustand der Vorrichtung in einem schematischen Schnitt; und
- Figur 5: einen entriegelten Zustand der Vorrichtung in einem schematischen Schnitt.

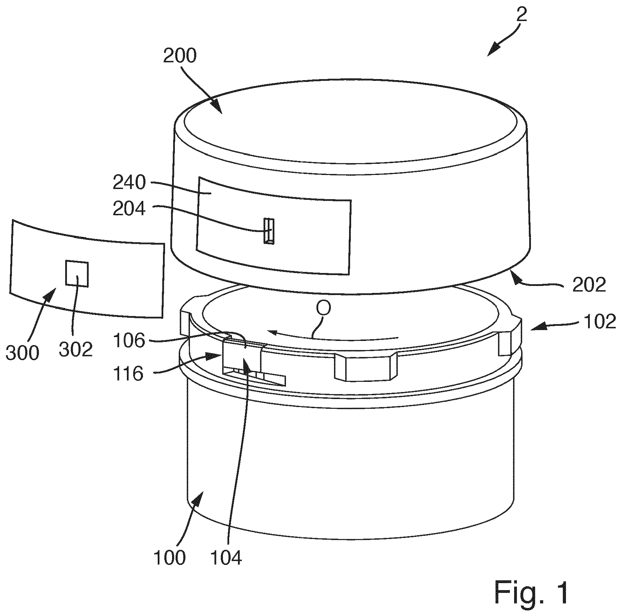

Figur 1 zeigt eine Vorrichtung 2 der Fluidtechnik. Die Vorrichtung 2 ist beispielsweise ein Prozessventil mit oder ohne Sensorik oder eine reine Messvorrichtung, die im Bereich einer Fluidleitung oder an einem Prozessventil angeordnet ist.

Die Vorrichtung 2 umfasst ein erstes und ein zweites Gehäuse 100, 200, welche über jeweilige erste und zweite Schnittstellen 102, 202 zueinander rotierbar von einem nicht verriegelten Zustand in einen verriegelten Zustand überführbar sind. In dem verriegelten Zustand eine in das zweite Gehäuse 200 eingebrachte Durchgangsöffnung 204, welche zu einer Entriegelungsfläche 104 eines flexiblen Verriegelungselements 106 der ersten Schnittstelle 102 führt, von einem zerstörbaren Siegel 300 verschlossen ist. Das Siegel 300 ist auch als Plombe, Sicherheitssiegel oder Schutzsiegel bezeichenbar.

Das Siegel 300 ist so ausgeführt, dass es nicht entfernt werden kann, ohne dabei zerstört zu werden. Das Siegel 300 ist dann zerstört, wenn es entweder durchstoßen wurde oder von der zugeordneten Klebefläche entfernt wurde. Durch das Anbringen des Siegels 300 an der Vorrichtung 2 kann später festgestellt werden, ob die Vorrichtung 2 (unbefugt) geöffnet wurde. Gewährleistungsansprüche und Garantieleistungen können entfallen und eine Betriebserlaubnis kann erlöschen, wenn das Siegel 300 beschädigt ist.

Beispielsweise umfassen die erste und zweite Schnittstelle 102, 202 einen Bajonettverschluss, bei welchem Vorsprünge 110a-d in dem verriegelten Zustand in zugeordnete Bajonettbahnen 210a-d eingreifen. Alternativ ist auch eine Schraubverbindung denkbar.

Das Siegel 300 umfasst beispielsweise einen Klebefilm, welcher das Siegel 300 mit einer die Durchgangsöffnung 204 umgebenden Außenfläche 240 des zweiten Gehäuses 200 verbindet. Das Siegel 300 ist ein Typenschild, welches den Typ der Vorrichtung 2 und weitere technische Daten enthält. Die mit der Vorrichtung 2 assoziierten Daten können auf einer Außenfläche des Siegels 300 aufgedruckt sein.

In einem Beispiel mit der Vorrichtung 2 assoziierte Daten wie beispielsweise eine eindeutige Kennung auf einem Transponder 302 des Siegels 300 abgespeichert sein. Der Transponder 302 ist drahtlos ansprechbar und die Daten können mit einem in die Nähe gebrachten Lesegerät ausgelesen werden. In einem Beispiel sind zumindest Teile des Transponders 302 in einem Bereich des Siegels angebracht, welcher die Durchgangsöffnung 204 verdeckt. Wird das Siegel 300 durchstochen, so wird auch der Transponder 302 zerstört.

In einem Beispiel ist zwischen den Gehäuseteilen 100 und 200 eine Dichtung, beispielsweise ein O-Ring aus einem Elastomer, angeordnet. So kann eine erhöhte Gehäusedichtheit beispielswese IP65 erreicht werden. Dazu noch kann auf Schrauben verzichtet werden und man hat ein cleanes Design, das gut abgereinigt werden kann. Auf Schraubverbindungen kann verzichtet werden.

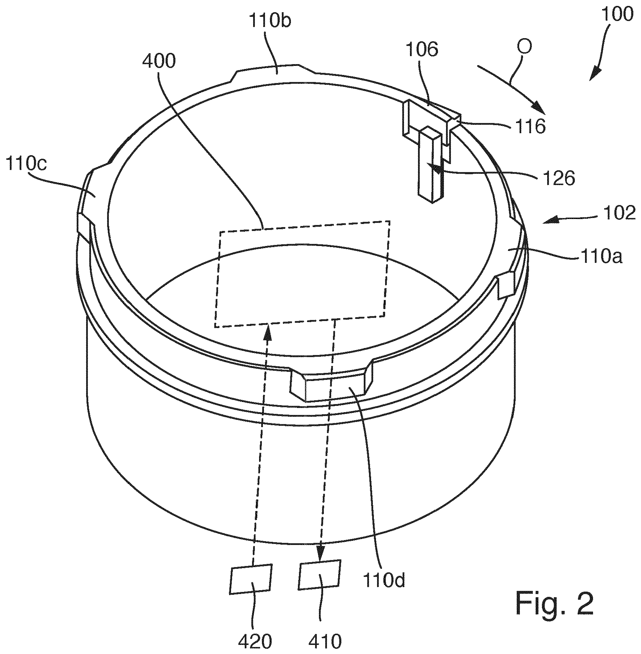

In Figur 2 ist gezeigt, dass eine Bewegung des flexiblen Verriegelungselements 106 radial nach innen durch einen inneren Anschlag 126 der ersten Schnittstelle 102 begrenzt wird.

Das erste Gehäuse definiert zumindest einen Teil eines Innenraums, in welchem eine Steuereinheit 400 zum Betreiben eines Aktors 410 und/oder eines Sensors 420 angeordnet ist. Die Steuereinheit 400 ist beispielsweise auf einer Leiterplatte angeordnet. Der Aktor 410 ist beispielsweise ein Ventilantrieb in Form eines Elektromotors und ist außerhalb des Innenraums angeordnet. Der Sensor 420 kann ebenfalls außerhalb des Innenraums angeordnet sein. Folglich kann die Vorrichtung 2 ein Prozessventil oder ein Messglied sein.

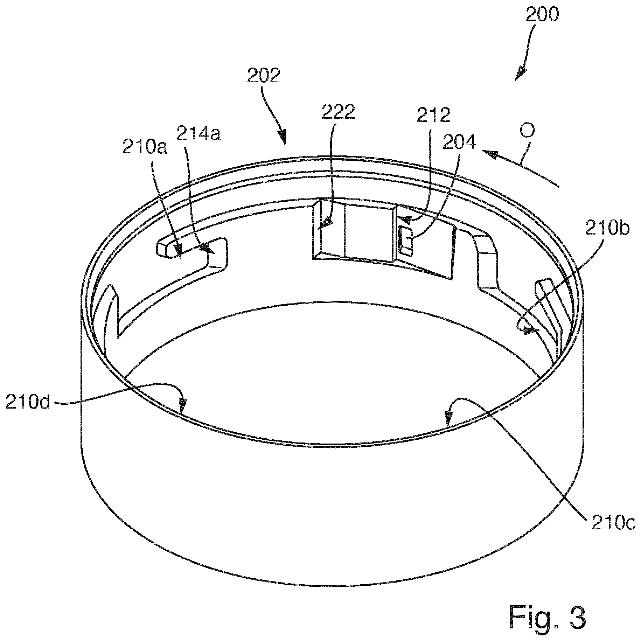

Figur 3 zeigt in einer perspektivischen Ansicht die zweite Schnittstelle 202 des zweiten Gehäuse 200. Die Durchgangsöffnung 204 befindet sich zwischen zwei Bajonettbahnen 210a-b der zweiten Schnittstelle 202.

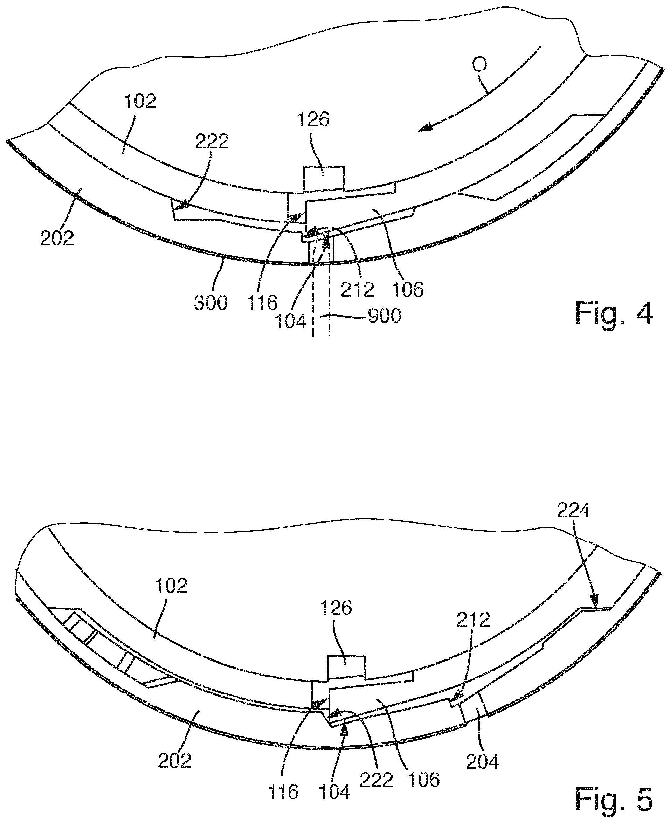

Figur 4 zeigt in einem Schnitt in einer Detailansicht, wie in dem verriegelten Zustand eine Bewegung des flexiblen Verriegelungselements 106 in Öffnungsrichtung O von einem Anschlag 212 der zweiten Schnittstelle 202 verhindert wird. Ausgehend von dem verriegelten Zustand wird eine Bewegung des flexiblen Verriegelungselements 106 in Öffnungsrichtung O ermöglicht, wenn ein freies Ende 116 des flexiblen Verriegelungselements 106 durch ein Einleiten einer Kraft auf die Entriegelungsfläche 104 so weit nach innen gedrückt wird, dass das freie Ende 116 über den Anschlag 212 hinweg in die Öffnungsrichtung O drehbar ist. Hierzu wird eine Spitze eines Werkzeugs 900 zunächst durch das Siegel 300 gedrückt, womit diese zerstört ist. Anschließend wird die Spitze des Werkzeugs durch die Durchgangsöffnung 204 bis zur Entriegelungsfläche 104 geführt. Durch Einleiten einer Kraft verbiegt sich das Verriegelungselement 106 nach innen, wobei das freie Ende 116 von dem Anschlag 212 wegbewegt wird. Damit blockiert das Verriegelungselement 106 nicht mehr die Bewegung der ersten Schnittstelle 102 in Öffnungsrichtung O und die erste Schnittstelle kann in die nicht verriegelte Position überführt werden.

Figur 5 zeigt in einem Detailschnitt den entriegelten Zustand der Vorrichtung 2, in welchem das zweite Gehäuse 200 durch eine axiale Bewegung lotrecht zur Zeichenebene von dem ersten Gehäuse 100 entfernbar ist. Nach einer erfolgten Wartung im Innenraum können die beiden Gehäuse 100 und 200 werkzeugfrei durch eine Steck- und anschließende Drehbewegung wieder in den verriegelten Zustand überführt werden. Anschließend wird eine erneute Verplombung mit einem neuen Siegel 300 durchgeführt.

Ausgehend von dem Anschlag 212 ist in Öffnungsrichtung O eine weitere Fläche 222 angeordnet, welche in einem Beispiel in dem entriegelten Zustand die Bewegung des Verriegelungselements 106 in Öffnungsrichtung O begrenzt. Die weitere Fläche 222 ist zum Positionieren und als Aussparung für das Verriegelungselement 106 vorgesehen. Das Verriegelungselement 106 hat damit beim Zusammenstecken der beiden Gehäuse 100 und 200 die gewünschte entspannte Position und muss nicht erst umgebogen werden.

Ein weiterer Anschlag 224 des zweiten Gehäuses dient alternativ oder zusätzlich der Begrenzung der Rotationsbewegung in dem entriegelten Zustand, wobei anschließend die Vorrichtung mittels einer axialen Bewegung der Gehäuse 100, 200 zueinander geöffnet werden kann.

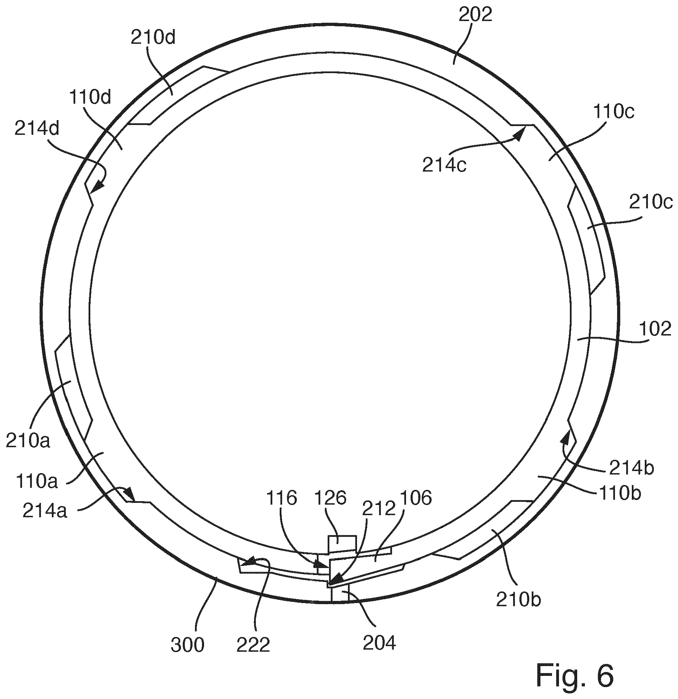

Figur 6 zeigt einen weiteren Schnitt der Vorrichtung 2 in dem verriegelten Zustand, wobei in dem verriegelten Zustand eine Bewegung der ersten Schnittstelle 102 entgegen der Öffnungsrichtung O von wenigstens einem Gegenanschlag 214a-d der zweiten Schnittstelle 202 verhindert wird. In Zusammenwirken mit dem Anschlag 212 wird die erste Schnittstelle 102 formschlüssig zu der zweiten Schnittstelle 202 festgelegt.

## Patentansprüche

1. Eine Vorrichtung (2) der Fluidtechnik umfassend ein erstes und ein zweites Gehäuse (100, 200), welche über jeweilige erste und zweite Schnittstellen (102, 202) zueinander rotierbar von einem nicht verriegelten Zustand in einen verriegelten Zustand überführbar sind, und wobei eine Durchgangsöffnung (204) in das zweite Gehäuse (200) eingebracht ist welche in dem verriegelten Zustand zu einer Entriegelungsfläche (104) eines flexiblen Verriegelungselements (106) der ersten Schnittstelle (102) führt, **dadurch gekennzeichnet, dass** die Durchgangsöffnung (204) von einem zerstörbaren Siegel (300) verschlossen ist.

2. Die Vorrichtung (2) gemäß dem Anspruch 1, wobei die erste und zweite Schnittstelle (102, 202) einen Bajonettverschluss umfassen, bei welchem Vorsprünge (110a-d) in dem verriegelten Zustand in zugeordnete Bajonettbahnen (210a-d) eingreifen.

3. Die Vorrichtung (2) gemäß einem der vorigen Ansprüche, wobei in dem verriegelten Zustand eine Bewegung des flexiblen Verriegelungselements (106) in Öffnungsrichtung (O) von einem Anschlag (212) der zweiten Schnittstelle (202) verhindert wird.

4. Die Vorrichtung (2) gemäß dem Anspruch 3, wobei ausgehend von dem verriegelten Zustand eine Bewegung des flexiblen Verriegelungselements (106) in Öffnungsrichtung (O) ermöglicht wird, wenn ein freies Ende (116) des flexiblen Verriegelungselements (106) durch ein Einleiten einer Kraft auf die Entriegelungsfläche (104) so weit nach innen gedrückt wird, dass das freie Ende (116) über den Anschlag (212) hinweg in die Öffnungsrichtung (O) drehbar ist.

5. Die Vorrichtung (2) gemäß Anspruch 3 oder 4, wobei das zweite Gehäuse einen weiten Anschlag (222; 224) umfasst, welcher in dem entriegelten Zustand die Bewegung des Verriegelungselements (106) in Öffnungsrichtung (O) begrenzt.

6. Die Vorrichtung (2) gemäß einem der vorigen Ansprüche, wobei in dem verriegelten Zustand eine Bewegung der ersten Schnittstelle (102) entgegen der Öffnungsrichtung (O) von wenigstens einem Gegenanschlag (214a-d) der zweiten Schnittstelle (202) verhindert wird.

7. Die Vorrichtung (2) gemäß einem der vorigen Ansprüche, wobei eine Bewegung des flexiblen Verriegelungselements (106) radial nach innen durch einen inneren Anschlag (126) der ersten Schnittstelle (102) begrenzt wird.

8. Die Vorrichtung (2) gemäß einem der vorigen Ansprüche, wobei wenigstens eines der Gehäuse (100, 200) einen Innenraum aufweist, in welchem eine Steuereinheit (400) zum Betreiben eines Aktors (410) und/oder eines Sensors (420) angeordnet ist.

9. Die Vorrichtung (2) gemäß einem der vorigen Ansprüche, wobei das Siegel (300) einen Klebefilm umfasst, welcher das Siegel (300) mit einer die Durchgangsöffnung (204) umgebenden Außenfläche (240) des zweiten Gehäuses (200) verbindet.

10. Die Vorrichtung (2) gemäß dem vorigen Anspruch, wobei das Siegel (300) ein Typenschild ist.

## Claims

1. Fluid technology device (2) comprising a first and a second housing (100, 200), which can be rotated relative to one another from an unlocked state into a locked state via respective first and second interfaces (102, 202), and a through-opening (204) being formed in the second housing (200), which, in the locked state, leads to an unlocking surface (104) of a flexible locking element (106) of the first interface (102), **characterized in that** the through-opening (204) is closed by a destructible seal (300).

2. Device (2) according to claim 1, wherein the first and the second interface (102, 202) comprise a bayonet lock, in which projections (110a-d) engage in associated bayonet slots (210a-d) in the locked state.

3. Device (2) according to any of the preceding claims, wherein, in the locked state, a movement of the flexible locking element (106) in the opening direction (O) is prevented by a stop (212) of the second interface (202).

4. Device (2) according to claim 3, wherein, starting from the locked state, a movement of the flexible locking element (106) in the opening direction (O) is made possible when, by applying a force to the unlocking surface (104), a free end (116) of the flexible locking element (106) is pressed so far inward that the free end (116) can be rotated over the stop (212) in the opening direction (O).

5. Device (2) according to claim 3 or 4, wherein the second housing comprises a wide stop (222; 224) which, in the unlocked state, limits the movement of the locking element (106) in the opening direction (O).

6. Device (2) according to any of the preceding claims, wherein, in the locked state, a movement of the first interface (102) counter to the opening direction (O) is prevented by at least one counter-stop (214a-d) of the second interface (202).

7. Device (2) according to any of the preceding claims, wherein a radially inward movement of the flexible locking element (106) is limited by an inner stop (126) of the first interface (102).

8. Device (2) according to any of the preceding claims, wherein at least one of the housings (100, 200) comprises an interior space in which a control unit (400) for operating an actuator (410) and/or a sensor (420) is arranged.

9. Device (2) according to any of the preceding claims, wherein the seal (300) comprises an adhesive film which connects the seal (300) to an outer surface (240) of the second housing (200) surrounding the through-opening (204).

10. Device (2) according to the preceding claim, wherein the seal (300) is a nameplate.

## Revendications

1. Dispositif (2) de la technologie de fluide comprenant un premier et un deuxième boîtiers (100, 200) que l'on peut faire passer par rotation l'un par rapport à l'autre d'un état non verrouillé à un état verrouillé par l'intermédiaire de première et deuxième interfaces (102, 202) respectives, et dans lequel une ouverture traversante (204) est ménagée dans le deuxième boîtier (200) qui, à l'état verrouillé, mène à une surface de déverrouillage (104) d'un élément de verrouillage flexible (106) de la première interface (102), **caractérisé par le fait que** ladite ouverture traversante (204) est fermée par un sceau destructible (300).

2. Dispositif (2) selon la revendication 1, dans lequel les première et deuxième interfaces (102, 202) comprennent une fermeture à baïonnette dans laquelle, à l'état verrouillé, des saillies (110a-d) s'engagent dans des glissières à baïonnette (210a-d) associées.

3. Dispositif (2) selon l'une quelconque des revendications précédentes, dans lequel, à l'état verrouillé, un mouvement de l'élément de verrouillage flexible (106) dans le sens d'ouverture (O) est empêché par une butée (212) de la deuxième interface (202).

4. Dispositif (2) selon la revendication 3, dans lequel, à partir de l'état verrouillé, un mouvement de l'élément de verrouillage flexible (106) dans le sens d'ouverture (O) est autorisé lorsqu'une extrémité libre (116) de l'élément de verrouillage flexible (106) est poussée vers l'intérieur par application d'une force sur la surface de déverrouillage (104) de manière à ce que l'extrémité libre (116) puisse être tournée au-delà de la butée (212) dans le sens d'ouverture (O).

5. Dispositif (2) selon la revendication 3 ou 4, dans lequel le deuxième boîtier comprend une large butée (222; 224) qui, à l'état déverrouillé, limite le mouvement de l'élément de verrouillage (106) dans le sens d'ouverture (O).

6. Dispositif (2) selon l'une quelconque des revendications précédentes, dans lequel, à l'état verrouillé, un mouvement de la première interface (102) dans le sens inverse de l'ouverture (O) est empêché par au moins une contre-butée (214a-d) de la deuxième interface (202).

7. Dispositif (2) selon l'une quelconque des revendications précédentes, dans lequel un mouvement radial vers l'intérieur de l'élément de verrouillage flexible (106) est limité par une butée intérieure (126) de la première interface (102).

8. Dispositif (2) selon l'une quelconque des revendications précédentes, dans lequel au moins l'un des boîtiers (100, 200) présente un espace intérieur dans lequel est disposée une unité de commande (400) destinée à faire fonctionner un actionneur (410) et/ou un capteur (420).

9. Dispositif (2) selon l'une quelconque des revendications précédentes, dans lequel le sceau (300) comprend un film adhésif qui relie le sceau (300) à une surface extérieure (240) du deuxième boîtier (200), laquelle entoure l'ouverture traversante (204).

10. Dispositif (2) selon la revendication précédente, dans lequel le sceau (300) est une plaque signalétique.
